# FASCICULE DE BREVET EUROPEEN

(11) **EP 4 594 177 B1**
(45) Date de publication et mention de la délivrance du brevet: **02.09.2026**
(21) Numéro de dépôt: 23768578.9
(22) Date de dépôt: 13.09.2023
(51) Int. Cl.: B64C 1/14

(54) **MÉCANISME DE VERROUILLAGE DE PORTE EN TRANSLATION CIRCULAIRE**
MECHANISMUS ZUM VERRIEGELN EINER TÜR IN KREISFÖRMIGER TRANSLATION
MECHANISM FOR LOCKING A DOOR IN CIRCULAR TRANSLATION

(30) Priorité: 29.09.2022 FR 2209878
(43) Date de publication de la demande: 06.08.2025
(73) Titulaire: Latecoere, 31500 Toulouse (FR)
(72) Inventeur: BORIES, Xavier, 31500 Toulouse (FR); DEVILLEZ, Sébastien, 31240 Saint Jean (FR); QUEMENT, Stephane, 31500 Toulouse (FR); MOUGENOT, Sébastien, 81300 Graulhet (FR)
(74) Mandataire: Junca, Eric
(86) Numéro de dépôt international: PCT/EP2023/075114
(87) Numéro de publication internationale: WO 2024/068275

(56) Documents cités:
- WO-A1-2020/079058
- FR-A1- 3 071 222
- FR-A1- 3 097 196
- US-A- 2 564 988

## Description

### DOMAINE TECHNIQUE

L'invention se rapporte à un mécanisme de verrouillage de porte en translation circulaire. Plus particulièrement, la présente invention se rapporte aux portes de type semi-plug de véhicules de transport de personnes et/ou de marchandises, c'est-à-dire des portes aptes à traverser leur encadrement lors de leur ouverture et de leur fermeture. Notamment les aéronefs, les autocars ou les cabines de poids lourd sont destinés à être équipés de telles portes.

Dans le domaine aéronautique en particulier, des butées installées sur les pourtours de la porte et de son encadrement permettent d'engager la porte en la maintenant dans son encadrement, ces butées étant d'autant plus sollicitées pendant les phases de vol de l'aéronef par la pressurisation exercée dans la cabine. A l'inverse, lors des phases d'arrêt de l'aéronef au sol, les butées sont désengagées afin d'autoriser l'ouverture des portes. Les portes et leur système d'ouverture/fermeture sont conçus pour être simples et rapides à manipuler, tout en évitant d'endommager la structure de l'aéronef - en particulier son fuselage - à laquelle ils sont attachés. Après être sortie de l'encadrement, la porte s'ouvre selon une cinématique de translation circulaire pendant laquelle la porte reste parallèle au fuselage et donc parallèle à la position qu'elle occupe lorsqu'elle est fermée. De manière similaire pendant sa fermeture, la porte suit une cinématique de translation circulaire inverse avant de rentrer dans l'encadrement et d'engager les butées.

### ÉTAT DE LA TECHNIQUE

Les mécanismes classiques de verrouillage de pièces mobiles sur une structure, telle qu'une porte d'aéronef ou équivalent, sont mis en œuvre en mettant en appui contre des butées chacune de ces pièces mobiles, ces butées étant installées sur la structure. Chaque butée assure un blocage des pièces mobiles dans une direction, le verrouillage des directions non bloquées étant réalisé par des crochets, leviers, verrous ou cames.

Un type classique de cinématique d'ouverture consiste à maintenir la porte constamment parallèle au fuselage afin d'éviter qu'elle ne vienne heurter ce dernier en cas d'ouverture d'urgence ou de conditions météorologiques désavantageuses. L'étape de désengagement des butées s'effectue donc en conservant la porte parallèle au fuselage : pour ce faire, la porte est d'abord levée ou abaissée pour désengager les butées, avant de lui appliquer - pour la sortir de son encadrement - un mouvement de translation circulaire, c'est-à-dire que la porte reste constamment parallèle à elle-même lors de son déplacement tout en décrivant une trajectoire circulaire. Le guidage en translation circulaire est réalisé en général par deux bielles disposées en parallèle et formant un parallélogramme.

Un inconvénient majeur lié à ce système est de faire porter au personnel navigant tout le poids de la porte lors de la phase de désengagement des butées. Des améliorations pour faciliter cette tâche ajoutent des mécanismes de compensation de masse et des bras d'articulation supplémentaires, mais ces moyens ont pour conséquence d'alourdir sensiblement la masse globale de la porte et donc de l'aéronef.

Un autre système d'ouverture tel que décrit dans le brevet US2751636A permet de générer une cinématique d'ouverture/fermeture de porte non parallèle au fuselage. Cette cinématique consiste à effectuer un premier pivotement de la porte autour d'un axe passant par sa médiane verticale pour désengager les butées, puis un second mouvement de translation circulaire, dit de « swivelling » (« pivotement » en langue anglaise), de la porte autour d'un axe coïncidant avec un bord vertical de l'encadrement. Un tel système, qui permet de s'affranchir du mécanisme de compensation de masse et facilite la manipulation de la porte, reste d'une grande complexité à mettre en œuvre car il fait intervenir une combinaison de bielles, de renvois et de pignons en grand nombre, ainsi qu'un levier de déblocage situé à proximité de la porte, et plus précisément sur son encadrement.

Par ailleurs, le premier pivotement de désengagement des butées peut être remplacé par un autre mécanisme, tel que décrit dans le brevet FR3087189, et qui présente l'avantage d'être actionné à mi-hauteur de la porte directement par l'intermédiaire du bras de porte. Cependant, cette solution reste également complexe à mettre en œuvre.

Un autre système d'ouverture tel que décrit dans le document WO2020079058A1 correspond au préambule de la revendication indépendante.

D'une façon générale, quelle que soit la cinématique, la phase de swivelling présente des risques d'instabilité qui entraînent des difficultés à manipuler la porte, des durées d'ouverture / fermeture prolongées, ainsi que des risques de dommages résultant de chocs de la porte sur le fuselage de l'aéronef.

Il est par ailleurs connu que ce problème d'instabilité de porte lors de la phase de swivelling a été abordé en utilisant deux bielles de guidage mobiles en rotation et placées en partie haute de la porte. Ce mode de réalisation implique que la porte reste en permanence parallèle au fuselage, notamment lorsque la porte est abaissée/soulevée lors des phases d'engagement/désengagement des butées. De plus, il est nécessaire d'utiliser au moins deux bielles de guidage dans la partie haute de la porte car si une seule bielle est utilisée, lors de la rotation du bras de porte entre environ 110° et 135°, la corde du bras de porte et de la bielle sont confondues et la cinématique devient instable.

Par ailleurs, après un désengagement des butées de portes par pivotements, la présence de deux bielles stabilise la porte pendant la phase de swivelling mais une manipulation involontaire sur la poignée de porte par exemple n'empêche pas cette porte d'être décalée accidentellement selon des positions non maîtrisées. À la suite d'un tel décalage du positionnement de la porte, celle-ci ne reste plus parallèle au fuselage pendant la phase de swivelling, ce qui entraine des risques d'endommagement de la porte et/ou du fuselage.

### EXPOSE DE L'INVENTION

L'invention a pour objectif principal de résoudre le problème de verrouillage de la porte vis-à-vis des éléments permettant la translation circulaire lors de la phase de swivelling dans le contexte d'une cinématique de sortie ou d'entrée de la porte non parallèle au fuselage, présentant l'avantage de se libérer de la contrainte de levage / descente vertical, et donc de proposer une porte facile à manipuler et présentant un gain de masse. Cependant la cinématique de sortie ou d'entrée de la porte non parallèle au fuselage implique une rotation de la porte, cette rotation étant non souhaitée lors de la phase de swivelling. Et des erreurs de manipulation du système d'ouverture, en particulier une action sur la poignée de la porte, peuvent mener à une rotation de la porte pendant la phase de swivelling.

Pour maintenir la porte parallèlement au fuselage lors de la translation circulaire, l'invention prévoit de réaliser un verrouillage de la porte lorsqu'elle est en translation circulaire en combinaison avec un blocage de la poignée de la porte pendant la translation circulaire.

Plus précisément, la présente invention a pour objet un ensemble à mécanisme de verrouillage de porte en translation circulaire comportant une porte de type semi-plug de véhicule et un corps, en particulier un fuselage d'aéronef, dans lequel est découpé au moins une ouverture réalisant un encadrement de porte. Le mécanisme comporte une poignée qui actionne une rotation de la porte sur elle-même dans l'encadrement de porte et relie la porte à l'encadrement de porte par deux entités de guidage de la porte en translation circulaire, à savoir : une entité-bras comportant un bras et un avant-bras en rotation l'un par rapport à l'autre selon un axe parallèle à l'axe de rotation de la porte, le bras et l'avant-bras étant reliés respectivement à l'encadrement de porte et à la porte, ainsi qu'une entité-guidage comportant une bielle et un levier en rotation l'un par rapport à l'autre selon un autre axe parallèle à l'axe de rotation de la porte et reliés respectivement à l'encadrement de porte et à l'axe de rotation de l'entité-bras, le mécanisme comportant également au moins un moyen de blocage du levier et de l'avant-bras par rapport à la porte ainsi qu'un élément de blocage de la poignée pendant la translation circulaire. Ainsi, le mécanisme verrouille le levier et l'avant-bras par rapport à la porte et bloque la poignée pendant la translation circulaire.

Avantageusement, un tel mécanisme allège la masse de la porte et de son ensemble d'ouverture/fermeture, la porte ne se déplaçant qu'en rotation et en translation circulaire sans levage ni descente.

Avantageusement également, le blocage du levier et de l'avant-bras pendant la phase de translation circulaire permet de bloquer la rotation de la porte en s'affranchissant d'éléments structuraux supplémentaires qui augmenteraient la masse de la porte et l'encombrement de l'ensemble d'ouverture/fermeture.

Avantageusement également, le blocage de la poignée de porte empêche son actionnement qui conduirait à une rotation de la porte et à un endommagement de la structure du véhicule. La combinaison du verrouillage du levier et de l'avant-bras avec le blocage de la poignée sécurise l'ouverture de la porte lors de la translation circulaire, en particulier dans le cas d'une manipulation accidentelle de la poignée ou d'un appui sur la porte. La poignée étant bloquée, elle peut être utilisée pour guider la porte lors de la translation circulaire sans risquer de faire pivoter la porte et d'endommager la structure.

Selon certains modes de réalisation préférés :
- le blocage du levier et de l'avant-bras par rapport à la porte est réalisé par au moins deux butées agencées sur la porte ;
- le blocage du levier est réalisé par les deux butées agencées sur la porte ;
- le blocage de l'avant-bras est réalisé par une butée agencée sur le levier ;
- l'élément de blocage de la poignée est réalisé par une béquille de liaison mécanique (appelée ci-dessous interlock) fixée en rotation sur la porte et en appui contre la poignée pendant la translation circulaire ;
- un moyen de traction engage la béquille contre la poignée ;
- le moyen de traction est un ressort de traction ;
- une rampe de guidage de la béquille est installée sur le bras et écarte la béquille de la poignée lorsque la porte tourne sur elle-même dans l'encadrement de porte ;
- la poignée est reliée à la porte par une came à deux faces qui comporte sur une de ses faces au moins un chemin de guidage, et sur l'autre face au moins un mur d'interdiction. ;
- la came comporte deux chemins de guidage de respectivement l'avant-bras et la porte ;
- l'avant-bras et la porte comportent chacun un roller engagé dans leur chemin de guidage respectif ;
- la came comporte deux murs d'interdiction ;
- le bras comporte un roller au contact des murs d'interdiction pendant la rotation de la porte, et
- les murs d'interdiction sont séparés par un espace dimensionné pour laisser passer le roller du bras.

Avantageusement, la butée de l'avant-bras sur le levier permet de bloquer l'avant-bras par rapport à la porte en évitant l'installation d'une butée supplémentaire sur cette porte, apportant ainsi un gain d'encombrement sur la porte et donc une installation de porte également plus rapide. Cette cinématique de blocage avec des butées « en cascade » autour du levier permet de bloquer le levier et l'avant-bras par rapport à la porte en ne mettant que le seul levier en butée contre la porte.

Avantageusement également, la béquille verrouille la poignée pendant la translation circulaire : la poignée ne peut donc pas être actionnée pendant cette rotation circulaire, son action provoquant uniquement la rotation de la porte.

Avantageusement également, les murs d'interdiction empêchent le déplacement du bras de porte tant que la porte n'est pas sortie totalement de l'encadrement de porte et est de nouveau parallèle au fuselage : les murs d'interdiction permettent donc de s'assurer que le blocage du levier et de l'avant-bras est effectué lorsque la porte est dans la bonne orientation avant la translation circulaire.

### PRESENTATION DES FIGURES

D'autres caractéristiques et avantages de la présente invention ressortiront à la lecture qui suit d'un exemple de réalisation détaillé sans en limiter la portée, en référence aux figures annexées qui représentent, respectivement :
- la figure 1a, la figure 1b et la figure 1c, des vues d'une porte en translation circulaire dans le plan de cette translation à différents instants ;
- la figure 2, une vue en perspective d'une porte d'avion ;
- la figure 3, une vue en perspective éclatée de l'entité-bras et de l'entité-guidage ;
- la figure 4, une vue en perspective des poignées intérieure et extérieure de porte constituant la poignée de porte ;
- la figure 5, une vue en perspective de l'entité-guidage et des butées sur la porte pendant la sortie de la porte de l'encadrement de porte ;
- la figure 6, une vue en coupe de la came de liaison de la poignée pendant la sortie de la porte de l'encadrement de porte ;
- la figure 7, une vue en coupe de la came lorsque la porte est prête à sortir de l'encadrement de porte ;
- la figure 8, une vue en perspective du mécanisme de verrouillage pendant la translation circulaire ;
- la figure 9a et la figure 9b, une vue en perspective de la béquille et un agrandissement de cette vue lorsque la porte est sortie de l'encadrement de porte, et
- la figure 10a, la figure 10b et la figure 10c sont des vues successives de la sortie de porte de son encadrement.

### DESCRIPTION DETAILLEE

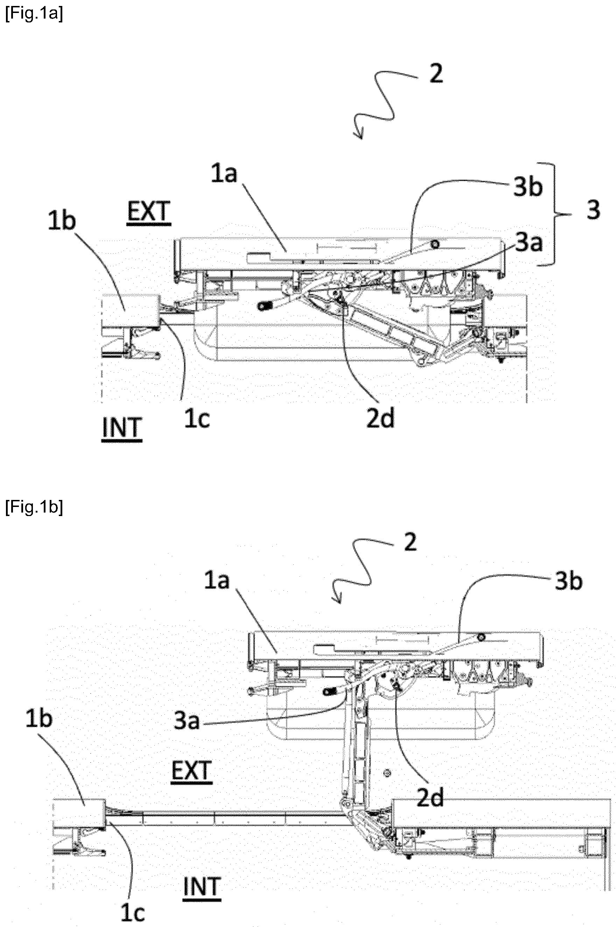

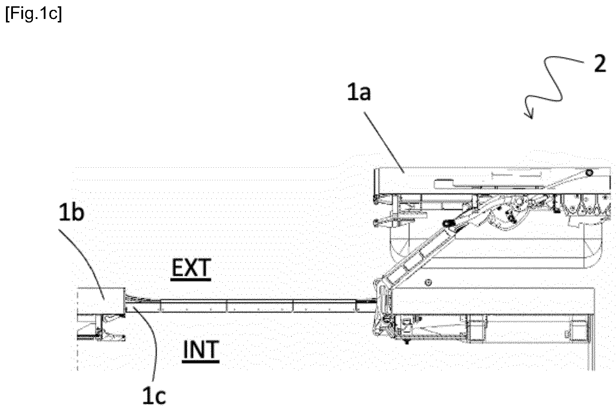

La figure 1a, figure 1b et figure 1c illustrent des positions d'une porte 1a en translation circulaire. Cette porte d'avion 1a est de type semi-plug et fait partie d'un ensemble à mécanisme de verrouillage 2 de la porte 1a en translation circulaire. L'avion (non représenté en entier) comporte également un fuselage 1b dans lequel est découpée une ouverture réalisant un encadrement de porte 1c. Lorsque la porte 1a est fermée, elle est confondue avec le fuselage 1b et délimite l'intérieur INT de l'avion avec l'extérieur EXT. Lors de son ouverture, la porte 1a se désengage du fuselage 1b puis sort du fuselage 1b dans une position représentée en figure 1a, la porte 1a étant parallèle au fuselage 1b à l'extérieur EXT de l'avion et continuant d'obturer l'encadrement.

L'ouverture de la porte 1a se poursuit selon une cinématique de translation circulaire pendant laquelle la porte 1a reste parallèle au fuselage 1b, comme illustré dans la position intermédiaire de la figure 1b, pour atteindre la position finale d'ouverture de la figure 1c. La fermeture de la porte 1a s'effectue selon une cinématique inverse : une translation circulaire depuis la position ouverte de la porte 1a en figure 1c jusqu'à la position de la porte 1a en figure 1a. La porte 1a est alors en vis-à-vis de l'encadrement de porte 1c et s'engage dans le fuselage 1b.

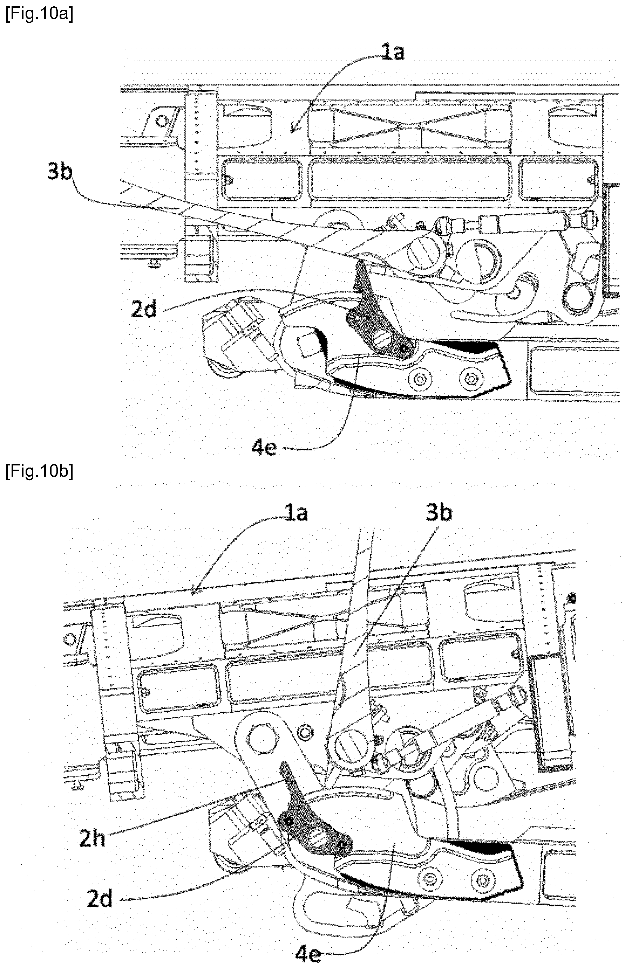

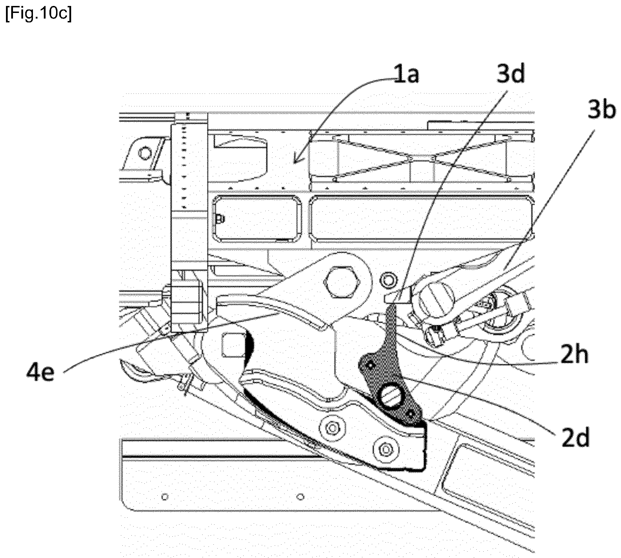

L'engagement/désengagement de la porte 1a du fuselage 1b est réalisé ici par une rotation de la porte 1a comme illustré successivement dans la figure 10a, la figure 10b et la figure 10c, cette rotation étant contrôlée par la poignée 3 de porte composée d'une poignée intérieure 3a et d'une poignée extérieure 3b. Les poignées intérieure 3a et extérieure 3b sont avantageusement diamétralement opposées l'une à l'autre : cette configuration permet de réaliser l'engagement/désengagement de la porte 1a selon une même cinématique de poignée depuis l'intérieur INT ou l'extérieur EXT de l'avion en actionnant respectivement la poignée intérieure 3a ou la poignée extérieure 3b. Pendant la translation circulaire, les poignées intérieure 3a et extérieure 3b sont bloquées par une béquille 2d et donc immobiles en rotation par rapport à la porte 1a.

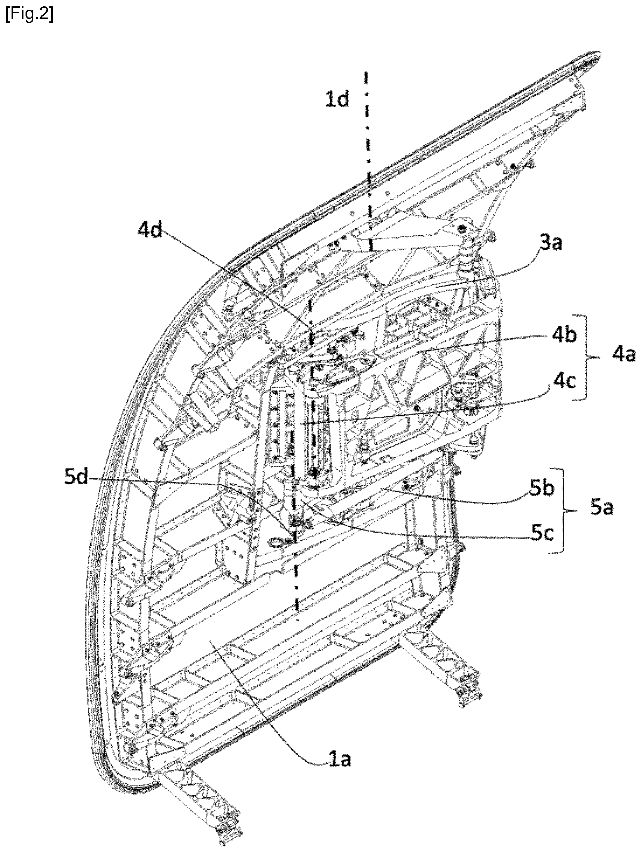

La figure 2 montre plus précisément une porte 1a d'avion équipée d'une poignée intérieure 3a qui actionne une rotation selon un axe 1d de la porte 1a sur elle-même dans l'encadrement de porte 1c , la porte 1a étant reliée à cet encadrement 1c par deux entités de guidage de la porte 1a en translation circulaire, à savoir : une entité-bras 4a, comportant un bras 4b et un avant-bras 4c en rotation l'un par l'autre selon un axe 4d parallèle à l'axe de rotation 1d de la porte 1a, le bras 4b et l'avant-bras 4c étant reliés respectivement à l'encadrement de porte 1c et à la porte 1a ; ainsi qu'une entité-guidage 5a, comportant une bielle 5b et un levier 5c en rotation l'un par rapport à l'autre selon un autre axe 5d parallèle à l'axe de rotation 1d de la porte et reliés respectivement à l'encadrement de porte 1c et à l'axe 4d de rotation de l'entité-bras 4c.

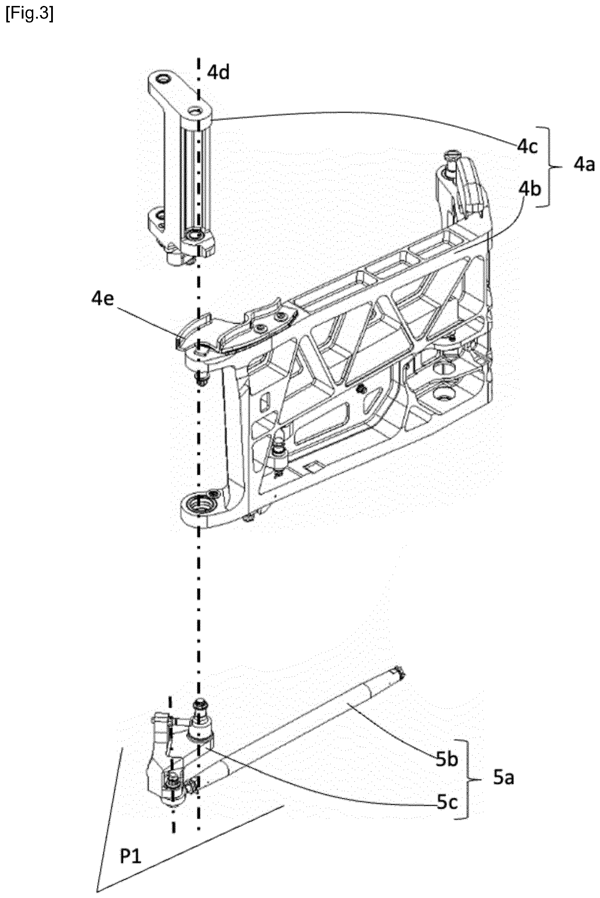

L'entité-bras 4a et l'entité-guidage 5a sont représentées plus en détail dans la vue éclatée en figure 3. L'entité-bras 4a réalise l'entrainement de la porte 1a lors de son ouverture et fermeture par translation circulaire. Le bras 4b présente avantageusement une structure renforcée permettant de supporter la masse de la porte 1a ainsi qu'une rampe 4e de guidage de la béquille 2d. L'entité-guidage 5a est juxtaposée à l'entité-bras 4a, parallèlement au bras 4b : l'entité-guidage 5a assure ainsi la stabilité de la cinématique de translation circulaire de la porte 1a. La bielle 5b et le levier 5c de l'entité-guidage 5a se déplacent dans le plan P1 perpendiculaire à l'axe 4d de rotation.

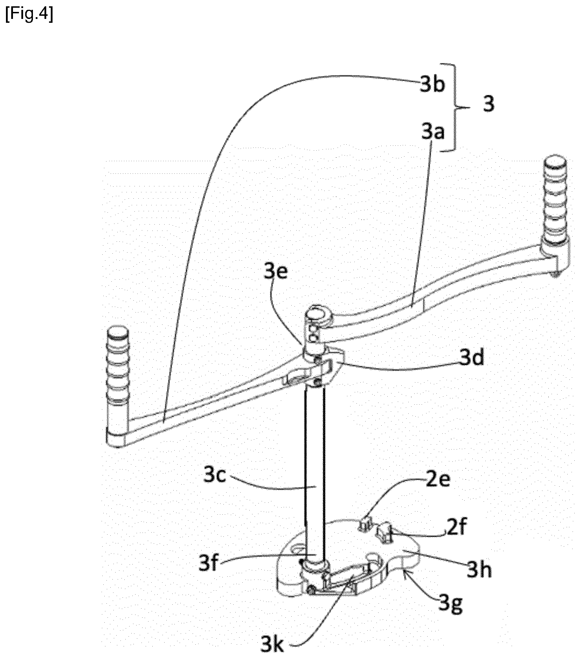

La figure 4 détaille la poignée 3 de porte composée d'une poignée intérieure 3a actionnable depuis l'intérieur INT de l'avion et d'une poignée extérieure 3b actionnable depuis l'extérieur EXT de l'avion, la porte 1a pouvant être ouverte ou refermée depuis l'intérieur INT et/ou l'extérieur EXT de l'avion. Les deux poignées 3a, 3b sont solidaires l'une de l'autre et fixées à une extrémité 3e d'un axe en rotation 3c, cet axe 3c transmettant la rotation de l'une quelconque des poignées 3a, 3b à la porte 1a.

A l'autre extrémité 3f de l'axe 3c de rotation se trouve une came 3g qui relie - à travers la longueur de l'axe 3c de rotation - les poignées 3a, 3b à la porte 1a. Cette came 3g présente deux faces et comporte sur une face 3h deux murs d'interdiction 2e, 2f, qui permettent de maintenir le désengagement complet de la porte comme cela sera expliqué plus loin. Cette face 3h comporte également le chemin de guidage 3k d'avant-bras. De plus, dans cet exemple illustré, la poignée extérieure 3b comporte une butée de béquille 3d au voisinage de l'axe de rotation 3c : la béquille 2d vient alors en appui contre cette butée de béquille 3d pendant la translation circulaire de la porte 1a, bloquant ainsi la rotation des poignées 3a, 3b et par conséquent la rotation de la porte 1a pendant la translation circulaire. Alternativement, la butée de béquille peut être présente sur la poignée intérieure 3a ou sur n'importe quel point de l'axe 3c en fonction de la position de la béquille 3d.

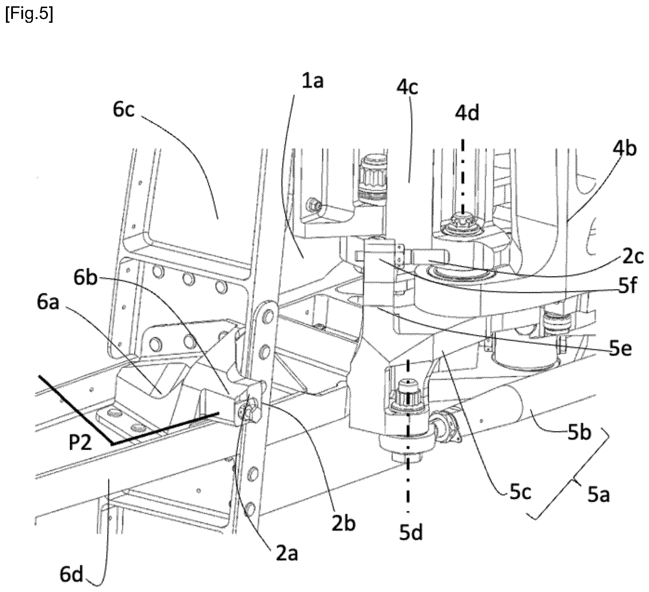

Une portion de la porte 1a avec son mécanisme de verrouillage 2 pendant l'engagement/désengagement de la porte 1a est plus précisément illustrée en figure 5 dans laquelle le bras 4b et l'avant-bras 4c apparaissent assemblés en rotation l'un par rapport à l'autre selon un axe 4d parallèle à l'axe de rotation 1d de la porte. De même, le levier 5c et la bielle 5b sont assemblés en rotation l'un par rapport à l'autre selon un autre axe 5d également parallèle à l'axe de rotation de porte 1d. De plus le levier 5c est également relié à l'avant-bras 4c et en rotation par rapport à celui-ci selon l'axe 4d de rotation entre le bras 4b et l'avant-bras 4c. Le levier 5c est lié respectivement à chacune de ses extrémités à un axe de rotation 4d, 5d parallèle à l'axe de rotation 1d de la porte : le levier 5c se déplace ainsi dans un plan perpendiculaire à cet axe de rotation de porte 1d.

Afin de bloquer le levier 5c au regard de la porte 1a, il est prévu dans cet exemple de réalisation d'agencer sur la porte 1a, plus précisément au voisinage de l'entité-guidage 5a, une ferrure 6a reliée à un cadre 6c et à une traverse 6d qui sont perpendiculaires l'un par rapport à l'autre. Cette ferrure 6a présente une extrémité 6b qui comporte deux faces perpendiculaires réalisant chacune une butée 2a, 2b agencées sur la porte 1a. Ces butées 2a, 2b ont pour fonction de bloquer le levier 5c par rapport à la porte 1a : elles sont donc orientées dans un plan P2 qui est perpendiculaire à l'axe 4d de rotation et parallèle au plan P1 dans lequel se déplace le levier 5c. Lorsque le levier 5c est au contact des butées 2a, 2b sur la porte 1a, il est bloqué selon deux directions perpendiculaires appartenant à son plan de déplacement et est donc immobilisé.

Le levier 5c présente également une patte 5e s'étendant dans la direction de l'axe de rotation de la porte et comporte à l'extrémité libre 5f de cette patte 5e une butée 2c orientée vers l'avant-bras 4c. Cette butée 2c réalise le blocage de l'avant-bras 4c par rapport au levier 5c. Ce levier 5c étant lui-même bloqué par rapport à la porte 1a, la butée 2c permet de réaliser également le blocage de l'avant-bras 4c par rapport à la porte 1a par l'enchainement combiné des moyens de blocage du levier 5c et de l'avant-bras 4c. Cet enchainement de moyens de blocage simplifie la structure de la porte en limitant en particulier le nombre de ferrures à installer pour bloquer chaque élément par rapport à la porte. D'autres moyens de blocage du levier 5c par rapport à la porte 1a peuvent être utilisés tel qu'un axe venant s'emmancher dans la ferrure 6a et le levier 5c, ou un crochetage du levier 5c sur la porte 1a.

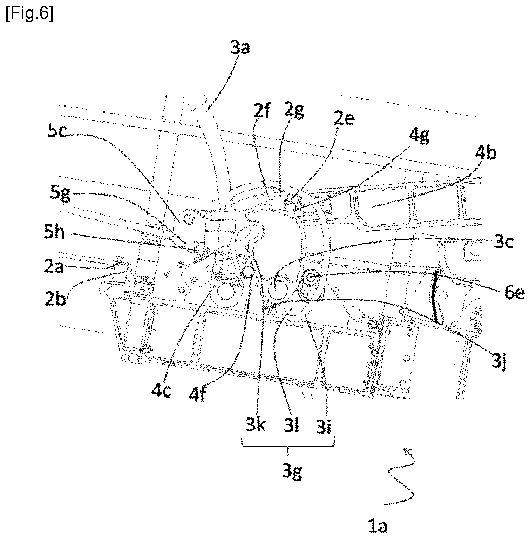

La figure 6 illustre une vue en coupe d'une came de liaison de poignée 3g pendant la sortie de la porte 1a de son encadrement. Dans cette vue, le mécanisme de verrouillage 2 apparaît selon un plan perpendiculaire à l'axe de rotation de porte 1d pendant l'engagement/désengagement de la porte 1a, la poignée intérieure 3a étant alors actionnée et la porte 1a en rotation sur elle-même. Une portion du levier 5c est représentée et montre les deux surfaces 5g, 5h du levier 5c qui vont, respectivement, au contact des deux butées 2a, 2b de la porte 1a.

La came 3g en coupe est représentée avec le chemin de guidages 3l de porte sur la face 3i, ainsi que le chemin de guidage 3k d'avant-bras et les murs d'interdiction 2e, 2f de l'autre face 3h. La came 3g est solidaire de l'axe 3c des poignées 3a, 3b par un ensemble vis-écrou 3j. La rotation d'une poignée 3a, 3b engendre dans ces conditions la rotation de la came 3g qui entraine la porte 1a par glissement du roller 6e d'actionnement dans le chemin de guidage 3l de porte. De plus cette rotation de la came 3g est contrôlée par l'avant-bras 4c qui est engagé dans le chemin de guidage 3k par le roller 4f de contrôle de l'avant-bras 4c.

Les deux murs d'interdiction 2e, 2f de la came 3g sont séparés par un espace 2g dimensionné et localisé pour laisser passer le roller de bras 4g lorsque la porte 1a est totalement désengagée ou pour engager la porte 1a. Pendant l'engagement/désengagement de la porte 1a, ce roller de bras 4g est en contact avec les murs d'interdiction 2e, 2f. Ce contact immobilise alors le bras 4b et la porte 1a qui ne peut donc pas effectuer la translation circulaire tant que la poignée 3 n'est pas arrivée en fin de course. Lorsque la poignée 3 est en fin de course, le roller de bras 4g est positionné à l'entrée du couloir formé par les murs d'interdiction 2e, 2f. Ces murs d'interdiction 2e, 2f permettent de s'assurer que la porte 1a est complètement désengagée de l'encadrement de porte 1c et reste parallèle au fuselage 1b à la suite de la rotation complète d'une des poignées 3a, 3b de porte et de la came 3g avant de procéder à la translation circulaire.

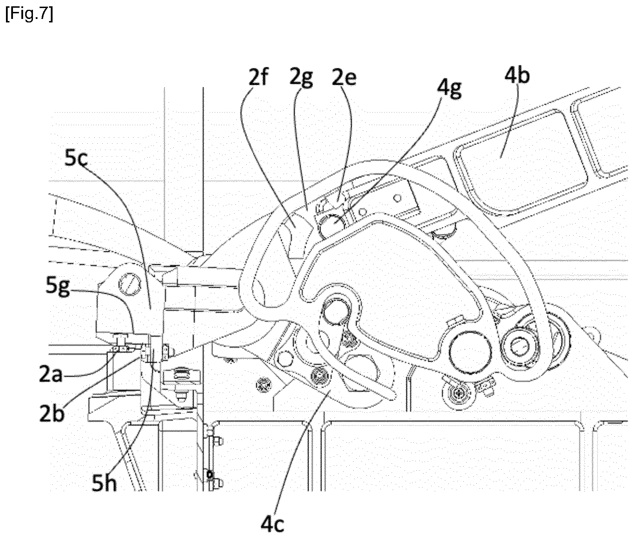

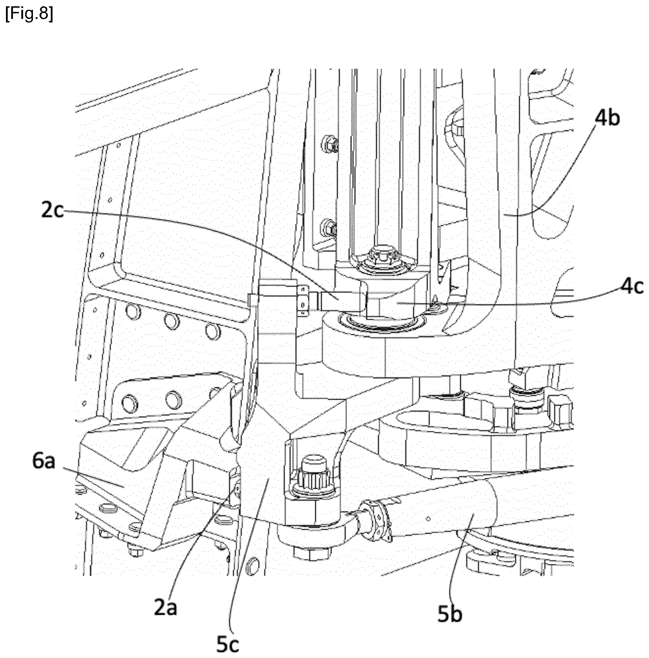

La figure 7 et la figure 8 montrent la configuration du mécanisme 2 de verrouillage à la fin du désengagement de la porte 1a, en particulier le contact des deux butées 2a, 2b de porte sur le levier 5c en figure 7 et le contact de la butée 2c du levier 5c sur l'avant-bras 4c en figure 8. Également en figure 7, le roller 4g de bras apparaît positionné à l'entrée du couloir formé par les murs d'interdiction 2e, 2f. Ainsi, en poussant la porte 1a vers l'extérieur EXT de l'avion, le roller 4g de bras passe dans l'espace 2g entre les murs d'interdiction 2e, 2f initiant alors la translation circulaire de la porte 1a. De même, lors de la fermeture de la porte 1a, une traction de la porte 1a vers l'intérieur INT de l'avion à l'issue de la translation circulaire amène le roller 4g de bras dans l'espace 2g entre les murs d'interdiction 2e, 2f.

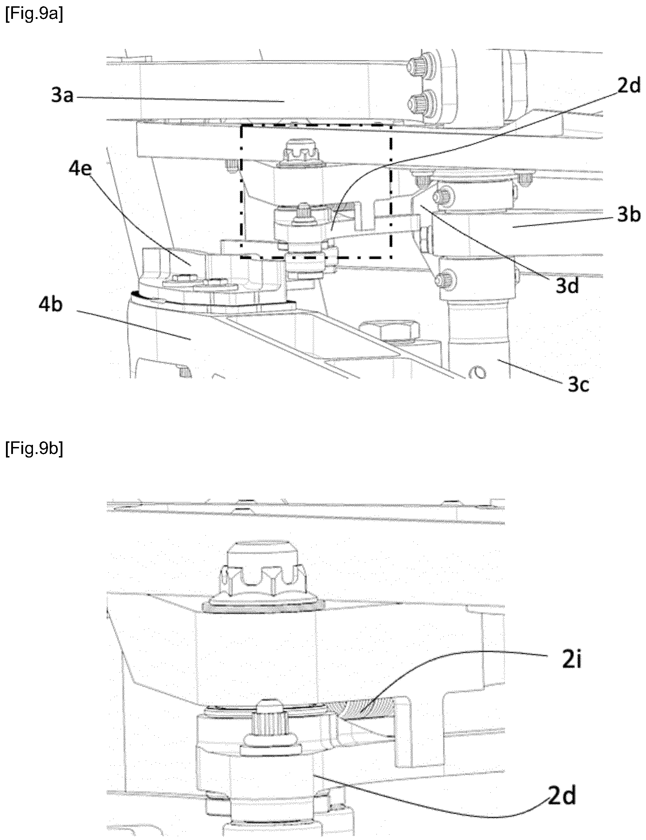

La figure 9a illustre la béquille 2d de liaison mécanique fixée en rotation sur la porte 1a et en appui contre la butée 3d de béquille 3b pendant la translation circulaire. La rampe 4e de guidage de la béquille 2d pendant l'engagement/désengagement de la porte 1a de l'encadrement 1c de porte est fixée sur le bras 4b. De plus, la béquille 2d est maintenue contre la butée 3d de béquille par un moyen de rappel, ici un ressort de traction 2i visible dans l'agrandissement en figure 9b, tout autre moyen de rappel pouvant être utilisé tel un piston, un vérin hydraulique ou pneumatique, ou un ressort de torsion. Dans cet exemple de réalisation, la béquille 2d est en appui sur la butée 3d que comporte la poignée extérieure 3b. Alternativement, la béquille 3d peut être en appui directement sur la poignée extérieure 3b ou la poignée intérieure 3a.

La cinématique de la béquille 2d est plus précisément détaillée successivement dans la figure 10a, figure 10b et figure 10c.

Dans la figure 10a, la porte 1a est fermée et la béquille 2d est sur la rampe 4e de guidage. Pour désengager la porte 1a de l'encadrement 1c de porte, la poignée extérieure 3b ou intérieure 3a est mise en rotation et la béquille 2d reste écartée de la poignée par la rampe de guidage 4e en réponse au déplacement de la porte 1a, comme représenté en figure 10b. A l'issue du désengagement de la porte 1a en figure 10c, celle-ci est de nouveau parallèle au fuselage 1b et la béquille 2d sort de la rampe de guidage 4a dans la configuration de la figure 9a et vient au contact de la butée 3d interdisant ainsi la rotation des poignées intérieure ou extérieure. L'extrémité 2h de la béquille 2d est alors en appui sur la butée 3d de béquille. Lors de l'engagement de la porte le contact entre la béquille 2d et la rampe de guidage 4e entraine une rotation de la béquille 2d de telles sorte que son extrémité 2h s'éloigne de la butée 3d et permette la rotation de la poignée 3.

Le blocage de la poignée peut également être réalisé par un autre moyen de blocage tel un crochet ou un verrou mécanique.

La translation circulaire de la porte est obtenue lorsque le bras et la bielle forment un parallélogramme. Cependant, une installation du bras et de la bielle en trapèze est également possible et dans la cinématique d'ouverture de porte ainsi réalisée, la porte dévie de façon contrôlée de son orientation parallèle. Le mécanisme de verrouillage de porte peut donc être utilisé de façon générale dans toute cinématique comportant un verrouillage de la porte.

## Revendications

1. Ensemble à mécanisme (2) de verrouillage de porte (1a) en translation circulaire, l'ensemble comportant une porte (1a) de type semi-plug de véhicule, un corps dans lequel est découpé au moins une ouverture réalisant un encadrement (1c) de porte et un mécanisme de verrouillage (2) comportant une poignée (3) actionnant une rotation de la porte (1a) sur elle-même dans l'encadrement (1c) de porte et reliant la porte (1a) à l'encadrement (1c) de porte par deux entités de guidage de la porte en translation circulaire :
- une entité-bras (4a) comportant un bras (4b) et un avant-bras (4c) en rotation l'un par rapport à l'autre selon un axe (4d) parallèle à l'axe de rotation (1d) de la porte (1a), le bras (4b) et l'avant-bras (4c) étant reliés respectivement à l'encadrement (1c) de porte et à la porte (1a),
- une entité-guidage (5a) comportant une bielle (5b) et un levier (5c) en rotation l'un par rapport à l'autre selon un axe (5d) parallèle à l'axe de rotation (1d) de la porte (1a) et reliés respectivement à l'encadrement (1c) de porte et à l'axe (4d) de rotation de l'entité-bras (4a) ;
le mécanisme (2) de verrouillage étant **caractérisé en ce qu'**il comporte au moins un moyen de blocage du levier (5c) et de l'avant-bras (4c) par rapport à la porte (1a) ainsi qu'un élément de blocage de la poignée (3) pendant la translation circulaire de la porte.

2. Ensemble selon la revendication 1 dans lequel le blocage du levier (5c) et de l'avant-bras (4c) par rapport à la porte (1a) est réalisé par au moins deux butées (2a, 2b) agencées sur la porte (1a).

3. Ensemble selon la revendication 2 dans lequel le blocage du levier (5c) est réalisé par les deux butées (2a, 2b) agencées sur la porte (1a).

4. Ensemble selon l'une quelconque des revendications 2 à 3 dans lequel le blocage du l'avant-bras (4c) est réalisé par une butée (2c) supplémentaire agencée sur le levier (5c).

5. Ensemble selon l'une quelconque des revendications 1 à 4 dans lequel l'élément de blocage de la poignée (3) est réalisé par une béquille (2d) de liaison mécanique fixée en rotation sur la porte (1a) et en appui contre la poignée (3) pendant la translation circulaire de la porte (1a).

6. Ensemble selon la revendication 5 dans lequel un moyen de traction engage la béquille (2d) contre la poignée (3) pendant la translation circulaire de la porte (1a).

7. Ensemble selon la revendication 6 dans lequel le moyen de traction est un ressort de traction.

8. Ensemble selon l'une quelconque des revendications 5 à 7 dans lequel une rampe (4e) de guidage de la béquille (2d) est installée sur le bras (4b) et écarte la béquille (2d) de la poignée (3) lorsque la porte (1a) tourne sur elle-même dans l'encadrement (1c) de porte.

9. Ensemble selon l'une quelconque des revendications 1 à 8 dans lequel la poignée est reliée à la porte (1a) par une came (3g) à deux faces qui comporte sur une de ses faces (3i) au moins un chemin de guidage (3k, 3l) et sur l'autre face (3h) au moins un mur d'interdiction (2e, 2f).

10. Ensemble selon la revendication 9 dans lequel la came (3g) comporte deux chemins de guidage (3k, 3l) de respectivement l'avant-bras (4c) et de la porte (1a).

11. Ensemble selon la revendication 10 dans lequel l'avant-bras (4c) et la porte (1a) comportent chacun un roller (4f, 6e) engagé dans leur chemin de guidage (3k, 3l) respectif.

12. Ensemble selon l'une quelconque des revendications 9 à 11 dans lequel la came (3g) comporte deux murs d'interdiction (2e, 2f).

13. Ensemble selon l'une quelconque des revendications 9 à 12 dans lequel le bras (4b) comporte un roller de bras (4g) au contact des murs d'interdiction (2e, 2f) pendant la rotation de la porte (1a).

14. Ensemble selon la revendication 13 dans lequel les murs d'interdiction (2e, 2f) sont séparés par un espace (2g) dimensionné pour laisser passer le roller de bras (4g).

15. Ensemble selon l'une quelconque des revendications précédentes dans lequel le véhicule est un aéronef comportant un fuselage servant de corps dans lequel est découpé l'encadrement de porte.

## Patentansprüche

1. Anordnung mit einem Mechanismus (2) zum Verriegeln einer Tür (1a) in kreisförmiger Translation, wobei die Anordnung eine Fahrzeugtür (1a) vom Typ Semi-Plug umfasst, einen Körper, in den mindestens eine Öffnung geschnitten ist, die einen Türrahmen (1c) schafft, und einen Verriegelungsmechanismus (2), der einen Griff (3) umfasst, der eine Drehung der Tür (1a) um sich selbst im Türrahmen (1c) betätigt und die Tür (1a) mit dem Türrahmen (1c) durch zwei Einheiten zur Führung der Tür in kreisförmiger Translation verbindet:
- eine Arm-Einheit (4a), die einen Arm (4b) und einen Ausleger (4c) umfasst, die sich relativ zueinander entlang einer Achse (4d) drehen, die zur Drehachse (1d) der Tür (1a) parallel ist, wobei der Arm (4b) und der Ausleger (4c) mit dem Türrahmen (1c) bzw. mit der Tür (1a) verbunden sind,
- eine Führungs-Einheit (5a), die eine Schubstange (5b) und einen Hebel (5c) umfasst, die sich relativ zueinander entlang einer Achse (5d) drehen, die zur Drehachse (1d) der Tür (1a) parallel ist, und die mit dem Türrahmen (1c) bzw. mit der Drehachse (4d) der Arm-Einheit (4a) verbunden sind;
wobei der Verriegelungsmechanismus (2) **dadurch gekennzeichnet ist, dass** er mindestens ein Mittel zum Blockieren des Hebels (5c) und des Auslegers(4c) in Bezug auf die Tür (1a) sowie ein Element zum Blockieren des Griffs (3) während der kreisförmigen Translation der Tür umfasst.

2. Anordnung nach Anspruch 1, wobei das Blockieren des Hebels (5c) und des Auslegers(4c) in Bezug auf die Tür (1a) durch mindestens zwei Anschläge (2a, 2b) erfolgt, die an der Tür (1a) angeordnet sind.

3. Anordnung nach Anspruch 2, wobei das Blockieren des Hebels (5c) durch die zwei Anschläge (2a, 2b) erfolgt, die an der Tür (1a) angeordnet sind.

4. Anordnung nach einem der Ansprüche 2 bis 3, wobei das Blockieren des Auslegers(4c) durch einen zusätzlichen Anschlag (2c) erfolgt, der an dem Hebel (5c) angeordnet ist.

5. Anordnung nach einem der Ansprüche 1 bis 4, wobei das Element zum Blockieren des Griffs (3) durch eine Stütze (2d) repräsentiert wird, die eine drehfeste mechanische Verbindung an der Tür (1a) aufweist und während der kreisförmigen Translation der Tür (1a) am Griff (3) anliegt.

6. Anordnung nach Anspruch 5, wobei ein Zugmittel die Stütze (2d) während der kreisförmigen Translation der Tür (1a) gegen den Griff (3) beaufschlagt.

7. Anordnung nach Anspruch 6, wobei das Zugmittel eine Zugfeder ist.

8. Anordnung nach einem der Ansprüche 5 bis 7, wobei eine Rampe (4e) zur Führung der Stütze (2d) am Arm (4b) angebracht ist und die Stütze (2d) von dem Griff (3) wegbewegt, wenn die Tür (1a) sich im Türrahmen (1c) um sich selbst dreht.

9. Anordnung nach einem der Ansprüche 1 bis 8, wobei der Griff mit der Tür (1a) durch einen Nocken (3g) mit zwei Seiten verbunden ist, der auf einer seiner Seiten (3i) mindestens eine Führungsbahn (3k, 3l) und auf der anderen Seite (3h) mindestens eine Sperrwand (2e, 2f) aufweist.

10. Anordnung nach Anspruch 9, wobei der Nocken (3g) zwei Führungsbahnen (3k, 3l) für den Ausleger (4c) bzw. die Tür (1a) aufweist.

11. Anordnung nach Anspruch 10, wobei der Ausleger (4c) und die Tür (1a) jeweils eine Rolle (4f, 6e) umfassen, die in ihre jeweilige Führungsbahn (3k, 3l) eingreift.

12. Anordnung nach einem der Ansprüche 9 bis 11, wobei der Nocken (3g) zwei Sperrwände (2e, 2f) aufweist.

13. Anordnung nach einem der Ansprüche 9 bis 12, wobei der Arm (4b) eine Armrolle (4g) aufweist, die sich während der Drehung der Tür (1a) mit den Sperrwänden (2e, 2f) in Kontakt befindet.

14. Anordnung nach Anspruch 13, wobei die Sperrwände (2e, 2f) durch einen Zwischenraum (2g) getrennt sind, der so bemessen ist, dass sich die Armrolle (4g) hindurchbewegen kann.

15. Anordnung nach einem der vorhergehenden Ansprüche, wobei das Fahrzeug ein Luftfahrzeug ist, das einen Rumpf aufweist, der als Körper dient, in dem der Türrahmen ausgeschnitten ist.

## Claims

1. An assembly (2) comprising a locking mechanism for a door (1a) capable of circular translation, the assembly comprising a semi-plug-type vehicle door (1a), a body in which at least one opening has been cut to form a door frame (1c) for the door, and a locking mechanism (2) comprising a handle (3) which causes the door (1a) to rotate about its own axis within the door frame (1c) and connects the door (1a) to the door frame (1c) via two circular-translation door-guiding elements:
- an arm assembly (4a) comprising an arm (4b) and a forearm (4c) which rotate relative to one another about an axis (4d) parallel to the axis of rotation (1d) of the door (1a), the arm (4b) and forearm (4c) being connected respectively to the door frame (1c) and to the door (1a),
- a guide assembly (5a) comprising a connecting rod (5b) and a lever (5c) which rotate relative to one another about an axis (5d) parallel to the axis of rotation (1d) of the door (1a) and are connected respectively to the door frame (1c) and to the axis (4d) of rotation of the arm assembly (4a);
the locking mechanism (2) being **characterised in that** it comprises at least one means for locking the lever (5c) and the forearm (4c) relative to the door (1a), as well as an element for locking the handle (3) during the circular translation of the door.

2. An assembly according to claim 1, in which the locking of the lever (5c) and the forearm (4c) relative to the door (1a) is achieved by at least two stops (2a, 2b) arranged on the door (1a).

3. An assembly according to claim 2, in which the locking of the lever (5c) is achieved by the two stops (2a, 2b) arranged on the door (1a).

4. An assembly according to any one of claims 2 to 3, in which the forearm (4c) is locked in place by an additional stop (2c) arranged on the lever (5c).

5. An assembly according to any one of claims 1 to 4, in which the locking element for the handle (3) is provided by a mechanically linked latch (2d) fixed in a rotationally fixed manner to the door (1a) and bearing against the handle (3) during the circular translation of the door (1a).

6. An assembly according to claim 5, in which a pulling means engages the latch (2d) against the handle (3) during the circular translation of the door (1a).

7. An assembly according to claim 6, in which the traction means is a tension spring.

8. An assembly according to any one of claims 5 to 7, in which a guide ramp (4e) for the latch (2d) is fitted to the arm (4b) and moves the latch (2d) away from the handle (3) when the door (1a) rotates on its own axis within the door frame (1c).

9. An assembly according to any one of claims 1 to 8, in which the handle is connected to the door (1a) by a double-sided cam (3g) which comprises, on one of its sides (3i), at least one guide track (3k, 3l) and, on the other side (3h), at least one stop wall (2e, 2f).

10. An assembly according to claim 9, in which the cam (3g) comprises two guide tracks (3k, 3l) for the forearm (4c) and the door (1a) respectively.

11. An assembly according to claim 10, in which the forearm (4c) and the door (1a) each comprise a roller (4f, 6e) engaged in their respective guide tracks (3k, 3l).

12. An assembly according to any one of claims 9 to 11, wherein the cam (3g) comprises two stop walls (2e, 2f).

13. An assembly according to any one of claims 9 to 12, in which the arm (4b) comprises an arm roller (4g) in contact with the stop walls (2e, 2f) during rotation of the door (1a).

14. An assembly according to claim 13, in which the stop walls (2e, 2f) are separated by a gap (2g) dimensioned to allow the arm roller (4g) to pass through.

15. An assembly according to any one of the preceding claims, wherein the vehicle is an aircraft comprising a fuselage serving as a body in which the door frame is cut out.
